# EUROPEAN PATENT APPLICATION

(11) **EP 4 703 888 A1**
(43) Date of publication of application: **04.03.2026**
(21) Application number: 25199089.1
(22) Date of filing: 29.08.2025
(51) Int. Cl.: G06F 11/16, G06F 11/14

(54) **MEMORY CONTROLLER AND MCU CHIP**

(30) Priority: 29.08.2024 CN 202411204204; 29.08.2024 CN 202411205099
(71) Applicant: GigaDevice Semiconductor Inc., Haidian, Beijing (CN)
(72) Inventor: GAO, Yang, Haidian, Beijing (CN); WANG, Nanfei, Haidian, Beijing (CN)
(74) Representative: dompatent

(57) **Abstract**

A memory controller and an MCU chip are provided by the present application. The memory controller adds a second memory controller to conventional memory controller architecture and is coupled to second NVM storing a backup of content of first NVM in the memory controller. With this arrangement, one more memory access path is established, which takes full advantage of the fast reading characteristics of the first NVM, and once a system bus identifies an error in content read from the first NVM or a problematic address, the second memory controller can automatically read exactly corresponding backup content from the second NVM and provide it on the system bus, or use it to accurately correct the error in the first NVM. This ensures correctness of content that a central processing unit (CPU) or other master on the system bus reads, without interrupting execution of the system's program.

## Description

### TECHNICAL FIELD

The present invention relates to the field of memory control technology and, in particular, to a memory controller and a microcontroller unit (MCU) chip.

### BACKGROUND

The evolution of microcontroller unit (MCU) chip technology has brought about the emergence of more and more advanced process platforms for MCU design and manufacturing. However, the evolution of embedded non-volatile memory (e.g., embedded flash (eFlash) memory), a common core MCU component, toward more advanced process nodes has gradually lagged behind the evolution of MCUs on such process platforms. Moreover, the operational mechanism, read and write speeds and other aspects of eFlash memory increasingly limits high-end MCU performance. Therefore, new process platforms typically provide a variety of new non-volatile memory (NVM) to replace and upgrade eFlash memory from various aspects. Commonly used new NVM includes ferroelectric random-access memory (FeRAM), magnetic random-access memory (MRAM), resistive random-access memory (RRAM), phase-change memory (PCM), etc. They utilize different mechanisms to achieve non-volatile storage of data and typically provide better performance than eFlash memory. However, some of these new memory techniques are not yet technically established, and the data storage mechanisms of some are susceptible to environmental factors. Therefore, many types of new NVM are less reliable, compared with the established eFlash or NOR flash memory. That is, data stored in such new NVM more tends to change, for example, due to perturbations from the outside world. Nevertheless, even when this happens, as the NVM remains normally writable, such changes can be corrected by rewriting correct content into them.

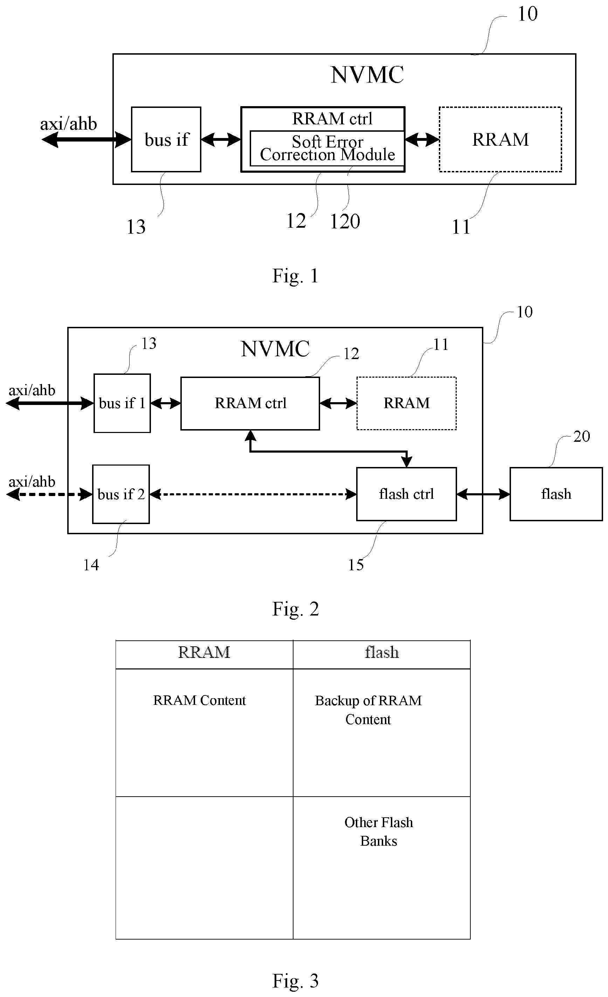

Taking RRAM as an example of such new NVM, use of RRAM in an MCU is typically achieved by the structure shown in Fig. 1, in which it is arranged in an NVM controller (NVMC) and responsible for storage of content such as user code. An RRAM controller Rram ctrl is responsible for read and write control of the RRAM, and a bus interface module bus_if is responsible for receiving data over a bus and converting it into a read operation on the RRAM. The bus may employ AXI, AHB or another bus protocol. Advanced MCU chips typically adopt an AXI interface. In view of low RRAM reliability, the conventional architecture usually employs an error checking and correction (ECC) function (e.g., single-bit error-correction, double-bit error detection (SEC-DED), double-bit error-correction, three-bit error detection (DEC-TED), etc.) for enhanced reliability. For example, if there is a single-bit error in data stored at an address of the RRAM, the ECC function can process the data to correct the error. However, when the data in the RRAM contains errors that exceed the error correction capability of the ECC function, the conventional NVMC architecture will not be able to ensure correctness of the data.

Therefore, there is a need for a novel NVMC architecture and MCU chip, which can not only provide ECC functionality, but can also, when data in an NVM contains errors that exceed the error correction capability of the ECC functionality, repair the data in the NVM, if required.

### SUMMARY OF THE INVENTION

It is an object of the present invention to provide a memory controller and an MCU chip with improved performance.

To this end, the present invention provides a memory controller coupled to second NVM and comprising:
a first NVM having a faster read and write speed than the second NVM and serving as a main memory for storing content necessary for operation of a system;
a first memory controller responsible for a read and write control of the first NVM;
a first bus interface, coupled to each of the first memory controller and a system bus and is configured for transfer of content between the system bus and the first memory controller;
a second memory controller, coupled to the first memory controller and configured to: cooperate with the first memory controller to back up content in the first NVM to the second NVM; and according to configuration information, read corresponding backup content from the second NVM and transfer the corresponding backup content to the system bus, or write the corresponding backup content from the second NVM to the first NVM for content repair.

This memory controller adds the second memory controller to conventional memory controller architecture and is coupled to the second NVM that stores a backup of content of the first NVM in the memory controller. With this arrangement, one more memory access path is established, which takes full advantage of the fast reading characteristics of the first NVM, and once the system bus identifies an error in content read from the first NVM or a problematic address, the second memory controller can automatically read exactly corresponding backup content from the second NVM and provide it on the system bus (either via the first bus interface, or via a second bus interface, in different examples), or use it to accurately correct the error in the first NVM. This ensures correctness of content that a central processing unit (CPU) or other master on the system bus reads, without interrupting execution of the system's program.

Optionally, the memory controller may further comprise a second bus interface, which is coupled to both the second memory controller and the system bus, and is configured to transfer backup content read from the second NVM by the second memory controller to the system bus. With this arrangement, once an error is identified in content read by the system bus from the first NVM or any corrupted address is detected in the first NVM, the second memory controller can automatically read corresponding backup content from the second NVM and return it to the system bus via the second bus interface, instead of via the first memory controller and the first bus interface. This shorter transmission path enables faster read operations.

Optionally, the memory controller may further comprise a control register coupled to the first memory controller, wherein the first memory controller is further configured to, after a system reset, read option bytes and load them into the control register, thereby validating the option bytes,
wherein the option bytes are special memory regions in the first or second NVM and are configured to store the configuration information.

With this arrangement, based on the configuration information in the option bytes, the memory controller of the present invention can provide appropriate handling strategies for different error conditions of the first NVM, addressing error handling needs of various users and applications.

Optionally, wherein the first memory controller further comprises a self-check module configured to, according to the configuration information, during a power-on reset (POR) phase or a system reset phase or a system operation phase, perform a self-check on content from the first NVM by reading and comparing the content from the first NVM with corresponding content from the second NVM, wherein if no difference is found, then the checked content from the first NVM is correct, or if a difference is identified, then the checked content from the first NVM contains an error.

With this arrangement, the self-check module can automatically check the content of the first NVM at any suitable time (e.g., following a reset, or during running of the MCU), and any detected error can be handled by ECC or real-time repair, facilitating use by users.

Optionally, wherein the option byte (Opt) loaded in the control register include a self-check option byte, wherein the configuration information stored in the self-check option byte contains a self-check address range and at least one associated register value, wherein the self-check address range is configured to determine which region of the first NVM the self-check module is to perform a self-check on the content from, the at least one register value is configured to determine whether the self-check module is to perform the self-check on content from the first NVM and to determine a phase for performing the self-check by the self-check module on the first NVM.

With this arrangement, based on the configuration information in the option bytes, the memory controller of the present invention can provide appropriate handling strategies for different error conditions of the first NVM, addressing error handling needs of various users and applications.

Optionally, wherein the self-check module is configured to: when the register value is configured to determine that the self-check is to be performed, at the phase for performing the self-check determined by the at least one register value, successively read and compare content at each address in the self-check address range of the first NVM with corresponding backup content from the second NVM, if no difference is found, then the content at the checked address of the first NVM is correct and a next address in the self-check address range is checked, until all addresses in the self-check address range have been checked.

With this arrangement, the self-check module can automatically check the content of the first NVM at any suitable time (e.g., following a reset, or during running of the MCU), and any detected error can be handled by ECC or real-time repair, facilitating use by users.

Optionally, the first memory controller may comprise a first soft error correction module configured to, as the system bus reads content from the first NVM, perform real-time error checking and correction (ECC) on the content.

The first soft error correction module may be further configured to: when the configuration information pre-configures that the first NVM is not to be repaired, correct errors detected in the ECC, which is within its error correction ability, and provide it on the system bus; or
regardless of whether the configuration information pre-configures that the first NVM is to be repaired, or not, correct errors detected in the ECC, which is within its error correction ability, provide it on the system bus, and when the memory controller becomes idle at a later time, the second memory controller reads corresponding backup content from the default backup bank and writes the backup content to the first NVM for content repair .

Thus, in the memory controller of the present invention, the first soft error correction module (which may be a single-bit error-correction, double-bit error detection (SEC-DED) or double-bit error-correction, three-bit error detection (DEC-TED) ECC module) can perform ECC on content from the first NVM, and can configure the option bytes so that backup content in the second NVM is to be used to repair the first NVM, or not. Additionally, the first soft error correction module can correct by ECC errors of a small number of bits (e.g., 1-bit errors). In this way, real-time ECC is achievable to ensure correctness of content in the first NVM, resulting in time savings. Further, as ECC can ensure correctness of content, the execution of the system's program can be continued, but not interrupted.

Optionally, the first soft error correction module may be further configured to, during writing of content to the first NVM and/or during backing up of content in the first NVM to the second NVM, generate a corresponding ECC code, which is stored in the second NVM along with the content in the first NVM.

Alternatively, the second memory controller may further comprise a second soft error correction module configured to, during backing up of content in the first NVM to the second NVM, generate a corresponding ECC code, which is stored in the second NVM along with the content from the first NVM.

As the system bus reads the content in the first NVM, the first soft error correction module may carry out real-time ECC on the content using the corresponding ECC code.

With this arrangement, the first soft error correction module can provide ECC protection to content written to the first NVM, and the first and/or second soft error correction modules can provide ECC protection to backup content written to the second NVM, increasing storage reliability of the first NVM and the second NVM.

Optionally, the second memory controller may be further configured to, when the first soft error correction module detects error within or exceeding its error correction ability, if the configuration information configures that the first NVM is to be repaired, read corresponding backup content from the second NVM and write the read content to the first NVM for content repair.

With this arrangement, the memory controller of the present invention can configure the configuration information in the option bytes so that the first NVM is to be repaired. Thus, backup content can be read from the second NVM and written to the first NVM for content repair. When the repair succeeds, execution of a program can be continued. This enables the system to operate with higher reliability and continuity.

Optionally, the second memory controller may read backup content of the first NVM from the second NVM address by address, row by row or block by block according to the configuration information and write it to the first NVM for repair of the first NVM.

With this arrangement, the memory controller of the present invention can configure corresponding repair unit, as required.

Optionally, the configuration information may further configure a threshold number of repeated repairs, wherein the second memory controller is also configured to repeatedly repair the error in the first NVM with backup content from the second NVM, the number of repeated repairs does not exceed the threshold number. With this arrangement, repeated repairs can be made to identify in time physically damaged addresses or blocks in the first NVM (containing errors which will fail to be repaired even when the number of repeated repairs that have been made reaches the threshold number), and the threshold number of repeated repairs can prevent the system from entering an infinite loop. Moreover, when the physically damaged address or block is identified in the first NVM, the memory controller can automatically skip it and directly read backup content from the second NVM. This enables continued operation of the system and enhances its operational security.

Optionally, the memory controller may further comprise a status register configured to record: first status information of an result of correction performed on the first NVM when the configuration information configures that the first NVM is not to be repaired, which contains statuses and addresses of errors; and second status information of an result of repair performed on the first NVM when the configuration information configures that the first NVM is to be repaired, which contains at least one of statuses, addresses and the number of repair-failed errors and the number of repair failures. With this arrangement, information about an ECC and real-time repair result can be recorded in real time in the status register.

Optionally, the first or second memory controller may be further configured to record, in the status register, the addresses of the repair-failed errors in the first NVM, which are then stored in the configuration information in the option bytes as corrupted address, or not, depending on a decision made according to a software strategy. This can ensure that a reliable action is taken when the addresses recorded in the status register is read at a later time.

Optionally, the second memory controller may be further configured to, upon the system bus reading the corrupted addresses in the configuration information and/or the error address recorded in the status register, automatically skip the first NVM, read corresponding backup content from the second NVM and return it to the system bus.

With this arrangement, when reading the first NVM, the memory controller of the present invention can skip its corrupted addresses set in the option bytes and/or previously-identified error addresses recorded in the status register and directly read backup content in the second NVM. This allows the system bus to obtain correct data in a shorter time and ensures as much as possible that a CPU or other master on the system bus reads correct content, without interrupting the execution of system's program.

Optionally, the status register may be further configured to generate an interrupt based on record(s) therein. With this arrangement, based on the interrupt, a CPU or other master on the system bus can take an appropriate action at a later time.

Optionally, the first memory controller may further comprise a counter module for counting at least one of the numbers respectively of errors in the first NVM detected during ECC by the first soft error correction module, repeated repairs of the first NVM and repair-failed errors in the first NVM.

With this arrangement, the memory controller of the present invention can determine whether to generate an interrupt, perform error correction or take a different action, based on the count value of the counter module.

Optionally, the first NVM may be embedded memory may be an embedded memory that requires no erasure prior to writing, and the second NVM is off-chip memory.

Optionally, the first NVM may comprise at least one of ferroelectric random-access memory (FeRAM), magnetic random-access memory (MRAM), resistive random-access memory (RRAM) and phase-change memory (PCM). Alternatively or additionally, the second NVM may comprise flash memory. With this arrangement, those types of memory can be embedded as the first NVM in an MCU chip on an advanced process platform, and the advantages of flash memory, including a large capacity, high reliability and ease of implementation on a single PCB with an MCU or of packaging within a single MCU package with an MCU die using a stack packaging technique can be leveraged to achieve a desired MCU architecture.

On the basis of the same inventive concept, the present invention also provides an MCU chip comprising a CPU and the memory controller as defined above. The CPU is coupled to the memory controller via a system bus and performs read and write operations on the first NVM in the memory controller. Second NVM is built in or externally connected to the MCU chip, and is coupled to the second memory controller in the memory controller.

As this MCU chip employs the memory controller of the present invention, it is much less likely to be interrupted due to errors in the content of the first NVM during startup or running of the system. Moreover, the system has improved reliability and performance.

### BRIEF DESCRIPTION OF THE DRAWINGS

Those of ordinary skill in the art will understand that the following drawings are presented to enable a better understanding of the present invention and not intended to limit the scope thereof in any sense, in which:
Fig. 1 is a schematic diagram illustrating the architecture of a conventional RRAM-based memory controller;
Fig. 2 is a schematic diagram illustrating the architecture of a memory controller according to a first embodiment of the present invention.
Fig. 3 schematically illustrates a memory-to-memory mapping of the architecture of the memory controller according to the first embodiment of the present invention;
Figs. 4A to 4C schematically illustrate three particular examples of the architecture of the memory controller of Fig. 2;
Figs. 5A to 5C are schematic flowcharts of three example read processes of the architecture of the memory controller according to the first embodiment of the present invention;
Figs. 6A and 6B schematically illustrate two particular examples of the architecture of a memory controller according to a second embodiment of the present invention;
Fig. 7 is a schematic flowchart a self-check process of the architecture of the memory controller according to the second embodiment of the present invention; and
Figs. 8A and 8B schematically illustrate two particular examples of the architecture of an MCU chip according to a third embodiment of the present invention.

### DETAILED DESCRIPTION

The following description sets forth numerous specific details in order to provide a more thorough understanding of the present invention. However, it will be apparent to those skilled in the art that the present invention can be practiced without one or more of these specific details. In other instances, well-known technical features have not been described in order to avoid unnecessary obscuring of the invention. It is understood that the invention may be embodied in many different forms and should not be construed as being limited to the embodiments set forth herein. Rather, these embodiments are provided so that this disclosure is thorough and conveys the scope of the invention to those skilled in the art. In the drawings, same reference numerals refer to same elements throughout. It will be understood that when an element is referred to as being "connected to" or "coupled to" another element, it can be directly connected or coupled to the other element, or intervening elements may also be present. In contrast, when an element is referred to as being "directly connected to" another element, there are no intervening elements. As used herein, the singular forms "a", "an" and "the" are intended to include the plural forms as well, unless the context clearly indicates otherwise. It will be further understood that the term "comprising" specifies the presence of stated features, steps, operations, elements, and/or components, but do not preclude the presence or addition of one or more other features, steps, operations, elements, components, and/or groups thereof. As used herein, the term "and/or" includes any and all combinations of the associated listed items.

The present invention will be described in greater detail below with reference to the accompanying drawings, which illustrate specific embodiments thereof. From the following description, advantages and features of the present invention will become more apparent. Note that the figures are provided in a very simplified form not necessarily drawn to exact scale for the only purpose of helping to explain the disclosed embodiments in a more convenient and clearer way.

### Embodiment 1

Referring to Fig. 2, in one embodiment of the present invention, there is provided a non-volatile memory (NVM) controller (NVMC) 10 coupled to second NVM (e.g., Flash memory) 20 and including first NVM (e.g., RRAM) 11, a first memory controller (RRAM ctrl) 12, a first bus interface (bus if 1) 13, a second bus interface (bus if 2, optional) 14 and a second memory controller (flash ctrl) 15.

The second NVM 20 may be off-chip or on-chip memory, and may be any suitable NVM such as flash memory. Compared with the first NVM 11, it may have the same or larger capacity, slower read and write speeds and higher reliability. The second NVM 20 may be implemented as a memory chip externally coupled to a chip (e.g., an MCU or other chip), in which the memory controller 10 is embodied, and these chips may be integrated on a single PCB. Alternatively, it may be implemented as a memory die and is packaged with an MCU die in which the memory controller 10 is embodied within the same MCU package using a system-in-a-package (SiP) approach (e.g., creating a SiP flash memory architecture). During use, the second NVM 20 is configured to store a backup of the content of the first NVM 11 (including code, data, etc).

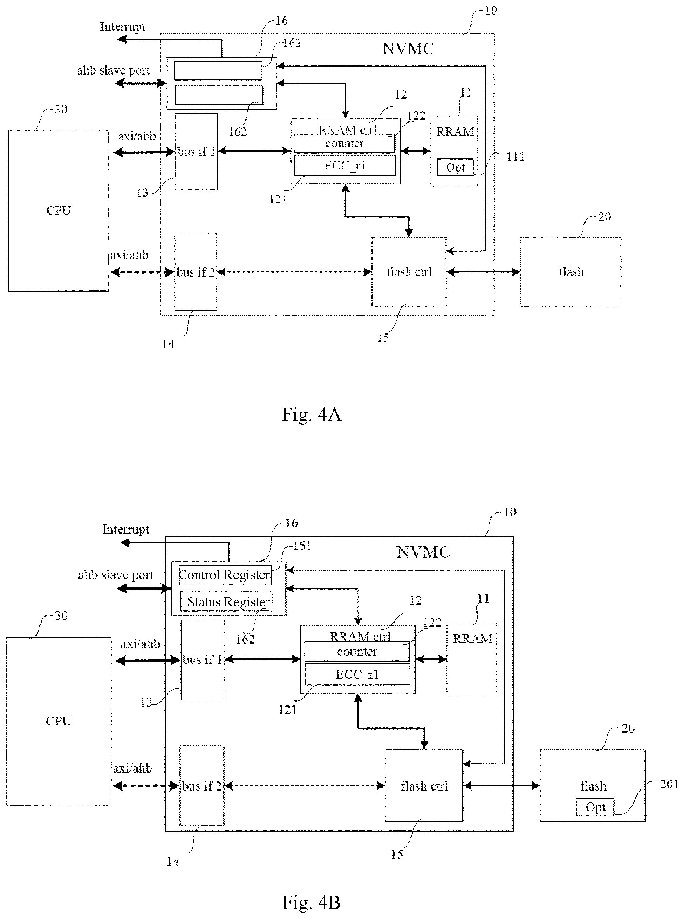

The first NVM 11 is a type of embedded NVM and need not be erased before new data is written into it. It may be implemented as any suitable one or more embedded memory arrays, such as ferroelectric random-access memory (FeRAM), magnetic random-access memory (MRAM), resistive random-access memory (RRAM) and phase-change memory (PCM). It can be used for non-volatile storage of content (e.g., code, data, etc.). For example, the first NVM 11 may be fabricated, together with a central processing unit (CPU) core of an MCU chip (e.g., 30 of Figs. 4A and 4B), on a platform of an advanced process node, thereby avoiding limiting the evolution and performance of the MCU chip on the process platform. In this case, the first NVM 11 has faster read and write seed than the second NVM 20 and serves as main memory of the MCU chip for execution of the system's program. Accordingly, it may store content (e.g., code, data, etc.) necessary for the running of a system of the MCU chip. This allows the system to provide improved performance. Further, the first NVM 11 may logically belong to the memory controller 10 but be physically separate therefrom. That is, the first NVM 11 may be physically arranged outside the memory controller 10 and is accordingly represented by a "dashed box" drawn inside a diagrammatic representation of the memory controller 10 in the annexed figures. In contrast, each of the first memory controller (RRAM ctrl) 12, the first bus interface (bus if 1) 13 and the second bus interface (bus if 2, optional) 14, which are all physically arranged within the memory controller 10, is represented by a "solid box" drawn inside the diagrammatic representation of the memory controller 10.

FeRAM, MRAM, RRAM and PCM employ different mechanisms to achieve non-volatile storage of data. Specifically, FeRAM utilizes the ferroelectricity of ferroelectric crystals to store data. Ferroelectricity is a property of a ferroelectric crystal that a central atom in the crystal moves and reaches a stable pattern when an electric field is applied thereto. After the electric field is removed from the crystal, the center atom will remain at the original position. Therefore, 1's and 0's can be written simply by applying electric fields to ferroelectric crystals in desired direction to change the state of the ferroelectric crystal. FeRAM features fast read and write operations, low power consumption and needlessness of a data retention voltage and of being periodically refreshed like DRAM. MRAM leverages magnetoresistance to achieve storage of data. Specifically, magnetic tunnel junctions (MTJs) are used as MRAM cells, which can be magnetized in different directions to store 1's and 0's. RRAM features a very simple structure consisting of a metal oxide film sandwiched by two electrodes. When a pulse voltage is applied to the metal oxide film, the film will experience a considerable resistance change, which can be used to store 1's and 0's. PCM stores 0's or 1's by utilizing the difference in electrical conductivity when phase-change materials switch between crystalline and amorphous states.

Unlike flash memory, FeRAM, MRAM, RRAM and PCM need not be erased before new data is written therein. Therefore, when the first NVM 11 is implemented as any of FeRAM, MRAM, RRAM and PCM, if an error is detected in the content of the first NVM 11, it can be corrected simply by exactly overwriting it with corresponding backup content read from the second NVM 20.

As an example, referring to Fig. 3, the second NVM 20 is NOR flash memory, and the first NVM 11 is RRAM. The NOR flash memory (i.e., the second NVM 20) has a greater capacity than the RRAM (i.e., the first NVM 11) and includes an RRAM backup bank and other storage banks. A logical address range of the RRAM backup bank is mapped to a logical address range of the RRAM (i.e., the first NVM 11). The RRAM backup bank is configured to store a backup of the content of the RRAM (i.e., the first NVM 11), and the other storage bank of the NOR flash memory (i.e., the second NVM 20) is configured for storage of data outside the logical address range of the RRAM.

The first memory controller 12 is responsible for read and write control of the first NVM 11. The first bus interface 13 is coupled to the first memory controller 12 and a system bus (which may employ the AXI, AHB or another bus protocol) and configured to transfer content between the system bus and the first memory controller 12. That is, in the present embodiment, the memory controller 10 can be attached to the system bus via the first bus interface 13.

The second memory controller 15 is responsible for read and write control of the second NVM 20. Specifically, the second memory controller 15 is coupled to the first memory controller 12 and configured to work with the first memory controller 12 to back up the content of the first NVM 11 into the second NVM 20. The second memory controller 15 is also configured to read corresponding backup content from the second NVM 20 and write it into the first NVM 11 through the first memory controller 12 for content repair according to configuration information, or transmit it to the system bus via the first memory controller 12 and the first bus interface 13, or via the second bus interface 14, and thus to the CPU core or another master on the system bus, to obtain correct content (e.g., code, data, etc).

Therefore, the memory controller of the present embodiment is obtained by adding a memory access path to the memory controller architecture of Fig. 1 by additionally providing the second memory controller 15 and coupling it to the second NVM 20. During a read operation of the system bus on the first NVM 11, the second NVM backs up content from the first NVM. Once the system bus identifies an error in the content read from the first NVM or a problematic address therein, the second memory controller 15 can automatically read exactly corresponding backup content from the second NVM 20 and provide it on the system bus, or use it to accurately correct the error in the first NVM 11. This ensures correctness of content that the CPU or another master on the system bus reads, without interrupting the execution of the system's program.

It will be understood that, when there is a need to read corresponding backup content from the second NVM 20 and return it to the system bus (e.g., as a consequence of the system bus detecting an error in the content of the first NVM 11, or a corrupted address therein), the second memory controller 15 will automatically read corresponding backup content from the second NVM 20 according to the configuration information and return it to the system bus through an appropriate return path. For example, in the case of the second bus interface 14 being included, the read backup content may be returned via the following return path: second NVM 20 -> second memory controller 15 -> second bus interface 14 -> system bus. In the case of the second bus interface 14 being omitted, the read backup content may be returned via the following return path: second NVM 20 -> second memory controller 15 -> first memory controller 12 -> first bus interface 13 -> system bus. Obviously, the backup content can be returned to the system bus, whether the second bus interface 14 is included or not, but a shorter return path allowing faster reading can be established with the second bus interface 14. Therefore, the second bus interface 14 may be either included or omitted, according to practical needs.

Referring to Figs. 4A to 4C, the memory controller further includes a register bank 16, which includes a control register 161 serving mainly for real-time repair control. The control register 161 is coupled to the first memory controller 12, and when a system reset occurs, the first memory controller 12 reads configuration information from option bytes (Opt) and loads it into the control register 161, thereby validating the option bytes. The option bytes (Opt) may be special memory regions in the first NVM 11 (e.g., Opt 111 of Fig. 4A) for storing configuration and other information necessary for the system. Alternatively, the option bytes (Opt) may be special memory regions in the second NVM 20 (e.g., Opt 201 of Fig. 4B) for storing configuration and other information of the system. The configuration information in the option bytes may be predefined by the system and updated based on ECC correction records or real-time repair records of the first NVM 11 according to a software strategy of the system. The configuration information may determine whether to repair the first NVM 11 by the memory controller.

Therefore, in this embodiment, based on the configuration information stored in the option bytes, an appropriate handling strategy may be formulated or selected according to a particular error condition of the first NVM 11. Moreover, every time the system is reset, the memory controller 10 first reads the configuration information from the option bytes in the first NVM 11 or the second NVM 20 and reloads the configuration information read from the option bytes into the control register 161 in the memory controller 10, thereby validating the option bytes. In this way, various error handling needs of different users and applications can be addressed.

In this embodiment, the second memory controller 15 is also configured to, in response to the system bus reading a corrupted address in the first NVM 11 set by the configuration information (or option bytes or control register 161), automatically read corresponding backup content from the second NVM 20 and return it to the system bus via the first memory controller 12, or via the second bus interface 14.

It will be understood that the control register 161 is not limited to being only readable or both readable and writable by the CPU, or being implemented as a single register. Instead, it may be a register bank consisting of multiple registers (e.g., including a register for setting corrupted address, a register for setting count threshold register, a selection register for a selection of whether to conduct repair, etc.) The present invention is not particularly limited in any sense in this regard.

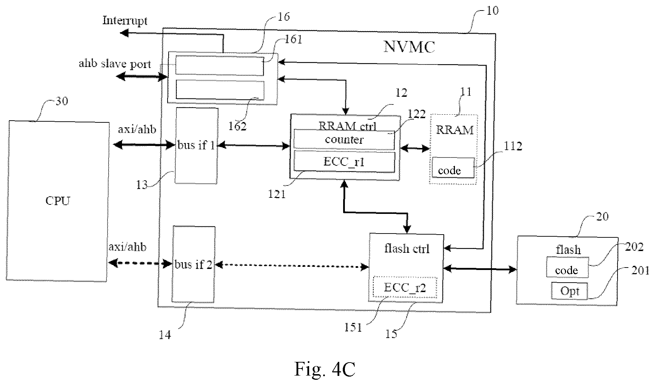

In one example, referring to Fig. 4C, the first memory controller 12 includes a first soft error correction module (ECC_r1) 121 comprising at least one of the following functions: (1) as the system bus writes content into the first NVM 11, generating a corresponding error checking and correction (ECC) code 112 and storing it in the first NVM 11 along with the corresponding content; (2) as the system bus reads the corresponding content from the first NVM 11, reading the ECC code 112 and performing an ECC process on the read corresponding content in real time using the ECC code 112, wherein if the configuration information (or option bytes or control register 161) pre-configures that the first NVM 11 is not to be repaired, when an error founded in the ECC process is within its error correction ability, it corrects the error and provides the corrected content to the system bus, or regardless of whether the configuration information pre-configures that the first NVM 11 is to be repaired or not, when an error founded in the ECC process is within its error correction ability, it corrects the error and provides the corrected content to the system bus, and in the latter case, when the memory controller (NVMC) becomes idle at a later time, the second memory controller reads corresponding backup content from a default backup bank and writes the backup content into the first NVM 11 for content repair; (3) as the second memory controller 15 backs up content of the first NVM 11 into the second NVM 20, generating a corresponding ECC code 202 and enabling the second memory controller 15 to store the ECC code 202 in the second NVM 20 along with the content of the first NVM 11; and (4) before the first memory controller 12 returns backup content read by the second memory controller 15 to the system bus or writes it into the first NVM 11 for content repair, reading the ECC code 202 and performing an ECC process on the backup content read by the second memory controller 15 from the second NVM 20 according to the ECC code 202.

For example, the ECC function of the first soft error correction module 121 may be single-bit error-correction, double-bit error detection (SEC-DED), double-bit error-correction, three-bit error detection (DEC-TED) or the like. SEC-DED is the function of the first soft error correction module 121 to correct 1 bit of content at a certain address in the first NVM 11 and checks 2 bits of content at a certain address in the first NVM 11. DEC-TED is the function of the first soft error correction module 121 to correct 2 bits of content at a certain address in the first NVM 11 and checks 3 bits of content at a certain address in the first NVM 11.

In this example, using the first soft error correction module 121, the memory controller is able to check the correctness of data, i.e., perform error checking on content, from the first NVM 11 in real time and correct errors of a small number of bits (e.g., one-bit errors) in content from the first NVM 11, which achieves real-time ECC for correctness of content from the first NVM 11 and saves time. Moreover, as correct content can be ensured after ECC correction, the system is allowed to execute the program normally without any interrupt.

Optionally, referring to Fig. 4C, the first memory controller 12 comprises the first soft error correction module (ECC_r1) 121, the second memory controller 15 may further include a second soft error correction module (ECC_r2) 151. In this case, the first soft error correction module (ECC_r1) 121 may have the following functions: (1) as the system bus writes content into the first NVM 11, generating a corresponding ECC code 112 and storing it in the first NVM 11 along with the corresponding content; and (2) as the system bus reads the corresponding content from the first NVM 11, reading the ECC code 112 and performing an ECC process on the read corresponding content in real time using the ECC code 112, wherein if the configuration information (or option bytes or control register 161) pre-configures that the first NVM 11 is not to be repaired, when an error founded in the ECC process is within its error correction ability, it corrects the error and provides the corrected content to the system bus, or regardless of whether the configuration information pre-configures that the first NVM 11 is to be repaired or not, when an error founded in the ECC process is within its error correction ability, it corrects the error and provides the corrected content to the system bus, and in the latter case, when the memory controller becomes idle at a later time, the second memory controller 15 reads corresponding backup content from the default backup bank and writes the backup content into the first NVM 11 for content repair. The second soft error correction module 151 may have the following functions: (1) as the second memory controller 15 backs up content of the first NVM 11 into the second NVM 20, generating a corresponding ECC code 202 and enabling the second memory controller 15 to store the ECC code 202 in the second NVM 20 along with the content of the first NVM 11; and (2) before the first memory controller 12 returns backup content read by the second memory controller 15 to the system bus or writes it into the first NVM 11 for content repair, reading the ECC code 202 and performing an ECC process on the backup content read by the second memory controller 15 from the second NVM 20 according to the ECC code 202.

With this arrangement, the first soft error correction module 121 can provide ECC protection to content written to the first NVM 11 and the second soft error correction module 151 can provide ECC protection to backup content written to the second NVM 20, increasing storage reliability of the first NVM 11 and the second NVM 20.

Optionally, the second memory controller 15 may be further configured to, when the error detected by the first soft error correction module 121 still exist or the error exceeds its own error correction ability, and if the configuration information (or option bytes or control register 161) pre-configures that the first NVM 11 is to be repaired, read backup content from the second NVM 20, write it to the first NVM 11 for content repair and instruct the system bus to read back corresponding content from the first NVM 11 to verify whether the repair is successful.

Referring to Figs. 4A to 4C, the memory controller of the present embodiment further includes a status register 162 configured to, when the configuration information (or option bytes or control register 161) pre-configures that the first NVM 11 is not to be repaired, record first status information of result of ECC performed by the first soft error correction module 121 on the first NVM 11, the record first status may contain statuses and addresses of errors, or when the configuration information (or option bytes or control register 161) pre-configures that the first NVM 11 is to be repaired, record second status information of a result of repair of the first NVM 11, the second status information may contain at least one of statuses, addresses and the number of repair-failed errors and the number of repair failures.

The first or second memory controller 12 or 15 is further configured to record addresses of repair-failed errors in the first NVM 11 (either addresses of the individual errors, or start and end addresses of a block containing the errors) in the status register 162, and a software strategy determines whether to store the addresses as corrupted addresses in the configuration information of the option bytes Opt.

The second memory controller 15 is further configured to, when the system bus reads a corrupted address from the configuration information and/or a recorded error address from the status register 162, automatically skip the first NVM 11, read corresponding backup content from the second NVM 20 and return it to the system bus. For example, if the software strategy determines that an error address recorded in the status register 162 is a corrupted address that is stored in (or updated to) the configuration information in the option bytes Opt, when the system bus reads the error address recorded in the status register 162 (i.e., the corrupted address that has been updated to the configuration information) next time, the first memory controller 12 may skip the corrupted address and instruct the second memory controller 15 to automatically read backup content from the second NVM 20 and return it to the system bus. In this way, based on the previous records in the status register 162, the memory controller 10 of the present embodiment can read correct content (i.e., backup content) corresponding to errors or problematic addresses (collectively referred to as "corrupted addresses" hereinafter) in the first NVM 11 at a higher speed.

Optionally, the status register 162 may be further configured to generate an interrupt according to a record therein, the CPU or another master on the system bus takes a corresponding subsequent action based on the interrupt.

It will be understood that the status register 162 may be only readable and clearable by the CPU, and may be implemented either as a single register, or as a register bank consisting of multiple registers (e.g., including address registers, an error count register, a failure count register, a result register indicative of successful or unsuccessful repair), without limiting the present invention in any sense.

Optionally, the configuration information of the option bytes Opt may also configure a threshold number of repeated repairs, and the second memory controller 15 may be further configured to repeatedly repair the errors in the first NVM 11 with corresponding backup content from the second NVM 20 until the threshold number is reached. If the errors are not successfully repaired even when the number of repeated repairs reaches the threshold, it is considered that repair of the first NVM 11 fails.

Optionally, the first memory controller 12 may further include a counter module 122 for counting at least one of the numbers of errors detected by the first soft error correction module 121, number of repeated repairs and the number of repair-failed errors, in the first NVM 11. With this arrangement, the memory controller of the present invention is able to determine whether to generate an interrupt, perform error correction or take a different action, based on the counter of the counter module.

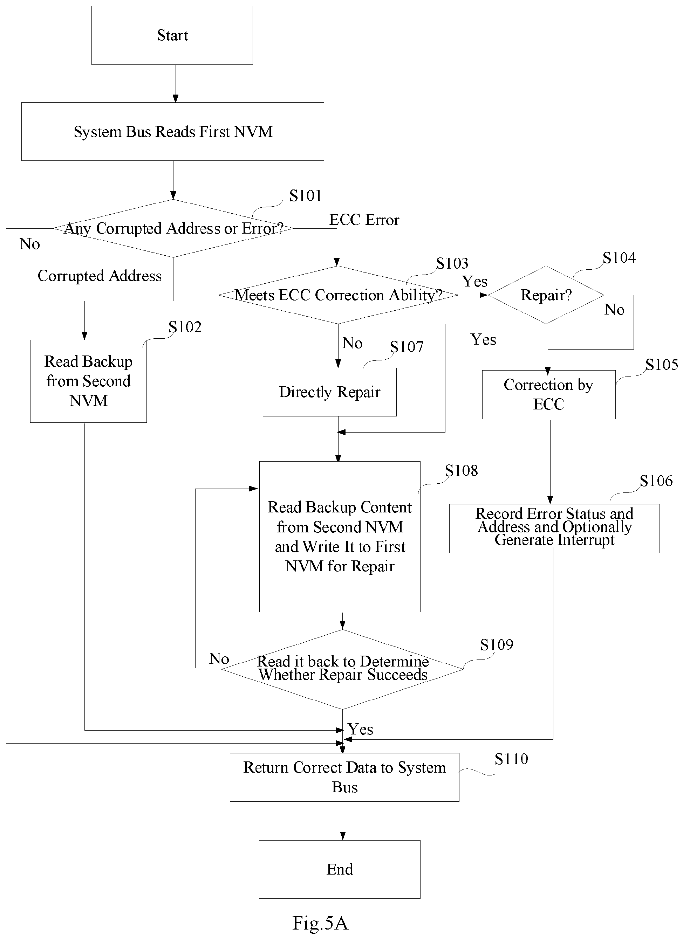

In one example, referring to Fig. 5A, in conjunction with Figs. 2 to 4C, as the CPU (or another master on the system bus, such as DMA or the like) reads the first NVM 11 via the system bus, the memory controller 10 of the present embodiment may carry out a process including the steps described below.

In S101, the first memory controller 12 determines whether a corrupted address is read from the configuration information loaded in the control register 161 (or from the option bytes Opt or control register 161). If not, the first soft error correction module 121 (which is a hardware ECC circuit) performs real-time error checking on content read from the first NVM 11 to detect, in real time, whether there is an error in the content read from the first NVM 11.

If an address that the first memory controller 12 reads is not a corrupted address in the configuration information and the read content is free of errors (this is called a "first read situation"), the process jumps to step S110 to return the correct content to the system bus (i.e., the first memory controller 12 returns the content read from the first NVM 11 directly to the CPU via the first bus interface 13). The CPU reads the correct content, and the system executes the program normally.

If the first memory controller 12 reads a corrupted address in the configuration information (or in the non-volatile option bytes Opt or control register 161) ("second read situation"), the process proceeds to step S102, in which the second memory controller 15 automatically reads, based on the corrupted address, corresponding backup content from the default backup bank of the second NVM 20. Moreover, step S110 is then carried out, in which the second memory controller 15 returns the correct content to the system bus. That is, it returns the content to the CPU, via the first memory controller 12 and the first bus interface 13, or via the second bus interface 14. Although the operation in the second read situation takes more time than that in the first read situation, the CPU can still read correct data, so the system's program can continue to be executed.

If the first soft error correction module 121 confirms an error in the content read by the first memory controller 12 ("third read situation"), it then carries out step S103 to determine whether the error in the content read by the first memory controller 12 is within its error correction ability. If so, i.e., if a small number of bit errors are identified in the content read by the first memory controller 12 and is within the error correction ability (e.g., SEC) of the first soft error correction module 121, the process proceeds to step S104, in which the configuration information (or control register 161 or option bytes Opt) pre-configures whether the first NVM 11 is to be repaired or not (the "repair" mentioned here and hereafter refers to reading backup content from the default backup bank of the second NVM 20).

If the first NVM 11 is not to be repaired, then step S105 is carried out, in which the first soft error correction module 121 performs ECC to correct the errors in the content. Moreover, step S106 is carried out to record first status information containing, among others, statuses (brk_status, e.g., 1-bit or 2-bit), addresses (brk_addr) and the number (brk_times, e.g., of 1-bit and 2-bit) of errors in the status register 162. After that, step S110 is carried out to return the correct content to the system bus, i.e., return the content that has been ECC-corrected by the first soft error correction module 121 to the CPU via the first memory controller 12 and the first bus interface 13, or via the first bus interface 13. Since the ECC-corrected content is correct, the system can still execute the program normally. It will be understood that the status register 162 may consist of multiple registers for recording the respective content items of the first status information. Optionally, the status register 162 may further generate an interrupt based on the recorded error statuses and addresses and other information and hand it over to the CPU for subsequent handling.

If the first NVM 11 is to be repaired, then step S108 is carried out, in which the second memory controller 15 reads corresponding backup content from the default backup bank of the second NVM 20, and the first memory controller 12 writes it to the first NVM 11 for content repair (i.e., via the "second NVM 20 -> second memory controller 15 -> first memory controller 12 -> first NVM 11" path). After that, step S109 is carried out, in which the first memory controller 12 reads back and determines whether the repair succeeds (i.e., whether the "first NVM 11 -> first memory controller 12 -> first bus interface 13" path works properly). If the repair is successful, step S110 is carried out to return the correct content to the CPU to enable it to continue executing the program. If the repair fails, step S108 may be repeatedly carried out to make other repair attempts. The number of such repeated repairs does not exceed an associated threshold (i.e., the repair succeeds before the number of repeated repairs reaches the threshold, or the repair does not succeed even when the number of repeated repairs reaches the threshold). Alternatively, step S106 may be carried out to record second status information in the status register 162, which contains the statuses, addresses and number of repair-failed errors, among others. Optionally, the status register 162 may further generate an interrupt based on the second status information that contains error statuses, addresses, etc. and hand it over to the CPU for subsequent handling.

In step S103, if it is determined that the errors in the content read by the first memory controller 12 exceed the error correction ability of the first soft error correction module 121 (e.g., DEC), then step S107 is carried out to directly repair the first NVM 11.

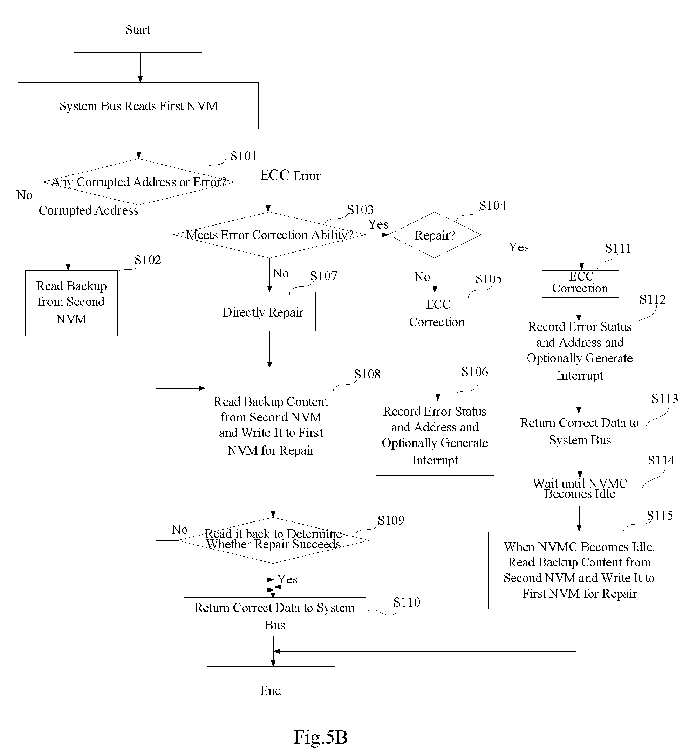

In another example, as shown in Fig. 5B, an ECC and real-time repair process performed by the memory controller 10 of the present embodiment on the first NVM 11 differs from the process in the above example of Fig. 5A in that, when it is determined in step S103 that errors in content read by the first memory controller 12 is within the error correction ability of the first soft error correction module 121, and in step S104, if the configuration information (or control register 161 or option bytes Opt) configures that the first NVM 11 is to be repaired, the following steps are performed in sequence.

In S111, the first soft error correction module 121 corrects the errors in the content. The step S111 may be the same as step S105 as described above, and further description thereof is deemed unnecessary.

In S112, first status information containing statues, addresses and the number of errors and the like is recorded in the status register 162. Step S112 may be the same as step S106 as described above, and further description thereof is deemed unnecessary.

In S113, the content that has been ECC-corrected by the first soft error correction module 121 is returned to the system bus. Step S113 may be the same as step S110 as described above, and further description thereof is deemed unnecessary.

In S114, waiting until the memory controller (NVMC) becomes idle.

In S115, when the memory controller (NVMC) becomes idle, the second memory controller 15 reads corresponding backup content from the default backup bank of the second NVM 20, and the first memory controller 12 writes it to the first NVM 11 for content repair. Step S115 may be the same as step S108 as described above, and further description thereof is deemed unnecessary.

Therefore, in this example, if the configuration information pre-configures that the first NVM 11 is to be repaired, when a small number of errors are detected, the errors are first ECC-corrected, and the corrected content is then returned to the system bus, avoiding the execution of a program by the system from being interrupted. Moreover, the first NVM 11 is repaired when the memory controller (NVMC) becomes idle, enabling rational utilization of the system's resources.

In other words, in the example of Fig. 5B, as the system bus reads the first NVM 11, if the first soft error correction module 121 detects a number of errors by ECC function within its error correction ability, regardless of whether the configuration information (or control register 161 or option bytes Opt) pre-configures that the first NVM 11 is to be repaired, the first soft error correction module 121 will correct the errors that it detects and provide the ECC-corrected content to the system bus in time, avoiding the execution of a program by the system from being interrupted.

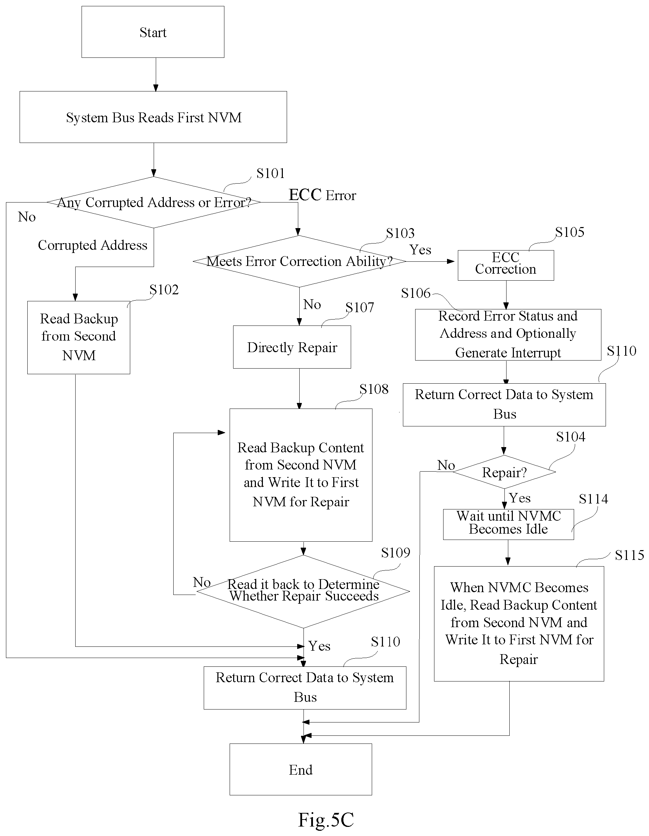

Since the process of Fig. 5B includes identical steps, simpler, more efficient processes can be obtained in other examples by altering the order of steps in this process. For example, in the example of Fig. 5C, an ECC and real-time repair process performed by the memory controller 10 on the first NVM 11 differs from the process in the above example of Fig. 5B in that, following the completion of step S103, steps S105 (correcting errors in content by the first soft error correction module 121), S106 (recording first status information containing statuses, addresses and the number of errors and the like in the status register 162) and S110 (returning the content that has been ECC-corrected by the first soft error correction module 121 to the system bus) are carried out before step S104 (determining whether the configuration information pre-configures that the first NVM 11 is to be repaired or not). If it is determined that the configuration information pre-configures that the first NVM 11 is to be repaired, steps S114 (waiting until the memory controller (NVMC) becomes idle) and S115 (after the memory controller (NVMC) becomes idle, the second memory controller 15 reads corresponding backup content from the default backup bank of the second NVM 20 and writes the read content to the first NVM 11 through the first memory controller 12 for content repair) are carried out. Thus, steps S111 to S113 are omitted.

In the processes in the above examples, the first NVM 11 may be repaired address by address, or in a block-wise manner (e.g., each block consists of one row of memory cells). When the first NVM 11 is configured not to be repaired, addresses of detected errors may be automatically recorded in the status register 162 (i.e., reported), and repair attempts may be made subsequently to correct the errors.

Any repair-failed address may be automatically recorded by the first or second memory controller 12 or 15 in the status register 162 (i.e., reported), and a determination may be then made according to a software strategy of the CPU of whether or not to store it in the option bytes Opt as a corrupted address. If it is determined according to the software strategy of the CPU that the repair-failed address is stored in the option bytes Opt as a corrupted address, then when the CPU reads the address at a later time, the memory controller 10 will automatically read corresponding backup content from the second NVM 20 according to the configuration information in the option bytes Opt and return it to the system bus.

If the address fails to be repaired even after repeated repairs, the second memory controller 15 may assert it as a corrupted address (or simply a "bad address"). Alternatively, it may assert a row or block of memory cells containing the address as a bad row or block. For example, physically, one or more bits in a row of memory cells may fail or be damaged due to a short circuit or other reasons. In this case, repair will fail even when the number of repeated repairs that have been made by software reaches a threshold predefined in the configuration information. Accordingly, these bits can be considered as having been physically damaged, or one or more rows or blocks containing the bits can be considered as bad rows or blocks that have been physically damaged. The first or second memory controller 12 or 15 may record any corrupted address or an address of any bad row or block in the status register 162 (i.e., error address reporting), indicating that the previous "second NVM 20 -> second memory controller 15 -> first memory controller 12 -> first NVM 11 -> (read back) first bus interface 13" path has failed and it may be stored in the option bytes Opt (i.e., updated to the configuration information) as a corrupted address, or not, according to a software strategy of the CPU. If it is finally determined that the address is stored in the option bytes Opt as a corrupted address according to the software strategy of the CPU, then when the CPU reads the record address at a later time, it will skip the first NVM 11 and read corresponding backup content from the second NVM 20 via the "second NVM 20 -> second memory controller 15 -> first memory controller 12 -> first bus interface 13" or "second NVM 20 -> second memory controller 15 -> second bus interface 14" path.

In this way, the memory controller of the present embodiment can read in real time backup content corresponding to a problematic address, without interrupting a program being executed. Moreover, when there is any physically damaged address or bad row or block in the first NVM 11, the memory controller can automatically skip it and allows the system to continue operation, increasing the security of the MCU chip.

### Embodiment 2

Unlike embedded flash memory, data stored in the first NVM is susceptible to interference from the surrounding environment or the like and very likely to experience changes. Therefore, in a second embodiment of the present invention, there is provided a memory controller additionally with self-check capabilities. It can perform a self-check on the content of first NVM 11 at a suitable time and apply ECC or real-time repair to any detected error, ensuring reliability of the content of the first NVM, increasing correctness of content read by the CPU from the first NVM 11, reducing the number of times of ECC or correction with backup content from second NVM 20 performed on content from the first NVM 11, accelerating and improving consistency of the system's operation and facilitating use by users.

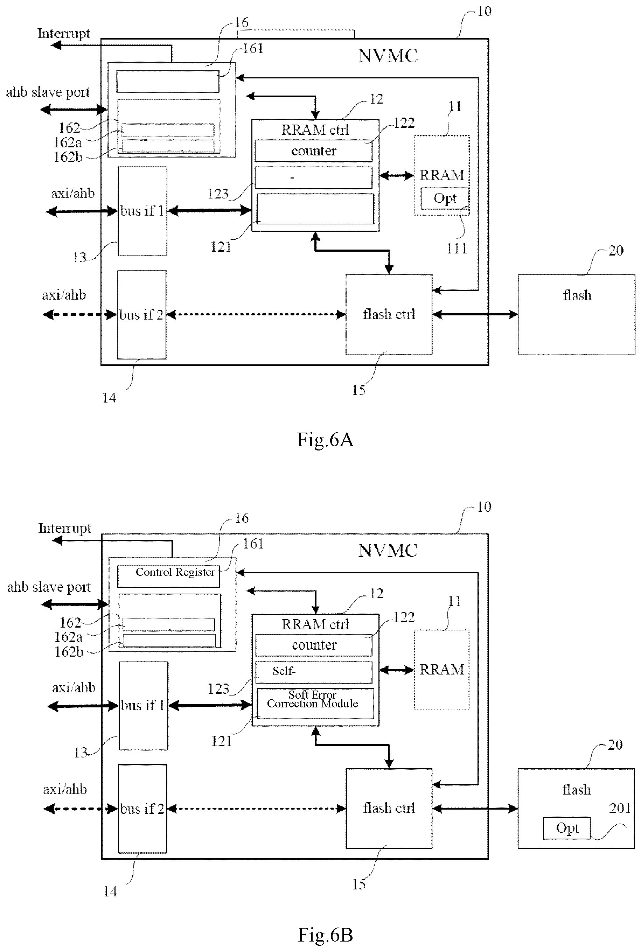

Referring to Figs. 6A and 6B, the memory controller (NVMC) 10 of this embodiment is coupled to second NVM (e.g., flash memory) 20 and also includes first NVM (e.g., RRAM) 11, a first memory controller (RRAM ctrl) 12, a first bus interface (bus if 1) 13, a second bus interface (bus if 2, optional) 14 and a second memory controller (flash ctrl) 15.

The memory controller 10 of this embodiment differs from that of the first embodiment in that the first memory controller 12 further includes a self-check module 123 configured to perform a self-check on the content of the first NVM 11 during a power-on reset (POR) or system reset, or running of the system, by reading the content from the first NVM 11 and comparing it with the corresponding backup content in the second NVM 20. No difference therebetween means correctness of the self-checked content of the first NVM 11, and any difference therebetween means the existence of an error or errors in the self-checked content of the first NVM 11. With this arrangement, the self-check module 123 can automatically check the content of the first NVM 11 at any suitable time (e.g., following a reset, or during running of the MCU), and any detected error can be handled by ECC or real-time repair, facilitating use by users.

In the present embodiment, the option bytes Opt additionally include a self-check option byte for self-check control. The self-check option byte stores configuration information containing a self-check address range and at least one register value. In other words, the configuration information of the option bytes loaded in the control register 161 includes not only configuration information necessary for error checking and real-time repair of the first NVM 11 but also configuration information necessary for performing a self-check at any time suitable for the system (e.g., during a POR, system reset, or running of the system, etc).

The self-check address range is an address range of the first NVM 11, where content is to be checked by the self-check module 123. The register value or values determine whether the self-check module 123 is to perform a self-check on the content of the first NVM 11 and, if so, determines the phase when the self-check is to be carried out by the self-check module 123. The self-check option byte may be configured by read and write operations of software after the CPU starts running. After a system reset occurs, the first memory controller 12 may read the self-check option byte from the option bytes (Opt) and load it into the control register 161, thereby validating the self-check option byte.

Accordingly, the status register 162 is configured to provide at least one of the following functions: (1) record status information generated during reading of the first NVM 11 as the system is running (which includes first status information about ECC and second status information about real-time repair); and (2) record third status information generated during the self-check, which includes at least one of statuses and addresses of errors detected during the self-check and the number of repair-failed errors.

For example, the status register 162 includes at least one of a first register 162a and a second register 162b. As the system bus reads the first NVM 11, the first register 162 is configured to record, when the configuration information configures that the first NVM 11 is not to be repaired, first status information of a result of ECC performed by the first soft error correction module 121 on the first NVM 11, which contains statuses and addresses of errors. Moreover, when the configuration information configures that the first NVM 11 is to be repaired, it is configured to record second status information of a result of repair of the first NVM 11, which contains at least one of statuses, addresses and the number of repair-failed errors and the number of repair failures. It is also configured to record other related status information.

As the self-check module 123 performs a self-check on the first NVM 11, the second register 162 is configured to record third status information of a result of the self-check on the first NVM 11 (including ECC and repair), which contains at least one of statues and addresses of errors detected in the self-check, the number of repair-failed errors, etc.

The option bytes (Opt) may be special memory regions in the first NVM 11 (e.g., Opt 111 of Fig. 6A) for storing configuration and other information of the system. Alternatively, they may be special memory regions in the second NVM 20 (e.g., Opt 201 of Fig. 6B) for storing configuration and other information of the system. The self-check address range may be determined as required, for example, as the entire address space of the first NVM 11, or part thereof.

Further, referring to Figs. 6A and 6B, when a register value in the self-check option byte is configured to carry out a self-check (i.e., the register value in the configuration information is configured to a specified value indicating that a self-check is to be performed at a corresponding phase), the self-check module 123 is configured to successively read, at the specified phase, content of the first NVM 11 at each address in the self-check address range stored in the self-check option byte and compare it with corresponding backup content in the second NVM 20. For content at each address in the first NVM 11, if no difference is found in the comparison made with the corresponding backup content, then content at the present self-checked address in the first NVM 11 is correct, and the next address in the self-check address range is then checked. This is repeated until the end of the self-check address range is reached. If content in the first NVM 11 is found to be different from the corresponding backup content, an error in the content stored in the present self-checked address in the first NVM 11 is identified. When this takes place, if the option bytes or control register 162 pre-configures that the first NVM 11 is to be repaired, the second memory controller 15 is further configured to read backup content from the second NVM 20 and write it to the first NVM 11 for content repair. After that, the self-check module 123 reads back the content and re-compares it.

Optionally, when the self-check module 123 detects an error in the first NVM 11, which is within the error correction ability of the first soft error correction module 121, and the configuration information (or option bytes or control register 161) pre-configures that the first NVM 11 is not to be repaired, the first soft error correction module 121 may be further configured to correct by ECC the error in the first NVM 11 detected by the self-check module 123.

Optionally, the first memory controller 12 may further include a counter module 122 for counting at least one of the number of errors in the first NVM 11 detected by the first soft error correction module 121, the number of errors in the first NVM 11 detected by the self-check module 123, the number of repeated repairs made by the second memory controller 15 to the first NVM 11 and the number of errors in the first NVM 11 that the second memory controller 15 fails to repair. Based on count value(s) of the counter module, the memory controller of the present invention is able to determine whether to generate an interrupt, whether to perform error repair, etc.

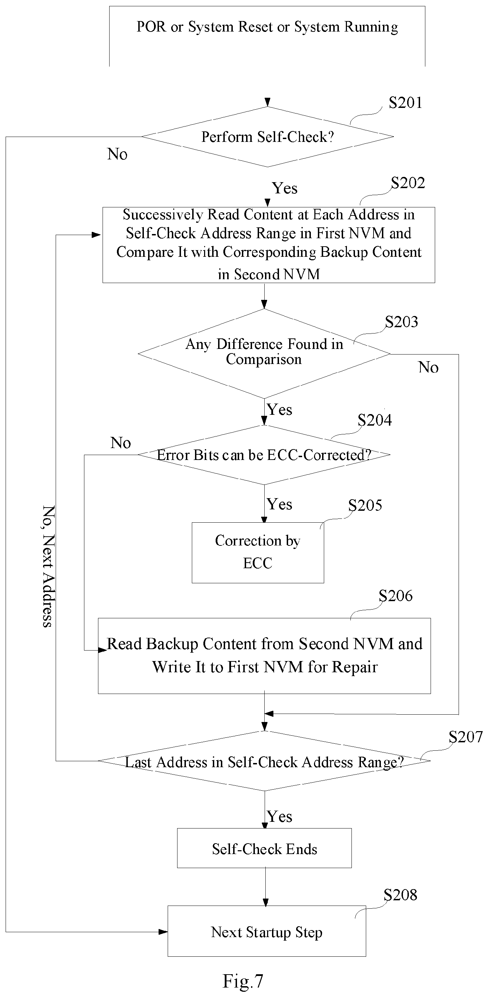

Referring to Fig. 7, a self-check performed by the memory controller 10 of the present embodiment after a reset (whether a system reset or a POR) is described in detail below, as an example. The self-check may include the following steps.

In S201, following the reset, the memory controller 10 (e.g., the first memory controller 12 therein) reads the option bytes Opt stored in the first NVM 11 or the second NVM 20 and reloads them into the control register 161, validating the option bytes Opt that include the self-check option byte. The memory controller 10 (e.g., the self-check module 123 therein) determines, based on a register value in the configuration information that is loaded in the control register 161, whether to perform a self-check on the content of the first NVM 11.

If no self-check is to be conducted, all the other steps in the self-check are skipped, step S208 is executed and the system initiates the next startup step.

If a self-check is to be conducted, then step S202 is executed, the self-check module 123 successively reads content of the first NVM 11 at each address in a self-check address range in the configuration information loaded in the control register 161, for each address, corresponding backup content are read by the second memory controller 15 from the second NVM 20, and content of the first NVM 11 corresponding to the currently read address is compared with corresponding backup content of the second NVM 20.

For content at each address in the first NVM 11, if no difference is found in step S202, then the content of the first NVM of current address is correct, then the control proceeds to step S207, and the self-check module 123 determines whether the address is the last address in the self-check address range. If not, the control proceeds to the step S202 again to check the next address. If so, the self-check is completed, and the control proceeds to step S208.

If a difference is identified in step S202, then step S204 is executed, the self-check module 123 determines whether the error in the content of the first NVM 11 is within the error correction ability of the first soft error correction module 121, i.e., whether the error can be ECC-corrected thereby.

If the error is within the error correction ability of the first soft error correction module 121 (e.g., a 1-bit error for SEC-DED ability of the first soft error correction module 121), then the configuration information loaded in the control register 161 is considered. If the configuration information configures that repair is not to be conducted, i.e., the error can be ECC-corrected, then step S205 is executed, the self-check module 123 enables the first soft error correction module 121 to correct the error in the first NVM 11 by ECC, and the control then proceeds to step S207 after obtaining the correct content. If the configuration information configures that repair is to be conducted, then step S206 is executed, the self-check module 123 enables the second memory controller 15 to read corresponding backup content from the second NVM 20, which is then written by the first memory controller 12 to the current address in the first NVM 11 to refresh the content and repair the error.

If the error exceeds the error correction ability of the first soft error correction module 121 (i.e., it cannot be ECC-corrected thereby; for example, the error is a 2- or more-bit error, while the ECC ability of the first soft error correction module 121 is SEC-DED), then the configuration information loaded in the control register 161 is considered. If the configuration information configures that repair is not to be conducted, as the detected error cannot be ECC-corrected, even if the self-check module 123 enables the first soft error correction module 121, the first soft error correction module 121 could not correct the error in the first NVM 11 by ECC process. Accordingly, the current address may be skipped, and the control may proceed to step S207. If the configuration information configures that repair is to be conducted, then step S206 is executed, the self-check module 123 enables the second memory controller 15 to read corresponding backup content from the second NVM 20, which is then written by the first memory controller 12 to the current address in the first NVM 11 to refresh the content and repair the error (e.g., 2-bit).

Additionally, in step S206, the content written to the current address in the first NVM 11 may be read back to verify whether the repair is successful. If the repair is successful, the control proceeds to step S208 to check the next address. If the repair is unsuccessful, step S206 is repeated to make additional repairs. The number of such repeated repairs does not exceed a threshold configured in the configuration information. That is, the handling of self-check of the address ends either when its repair succeeds before the number of repeated repairs reaches the threshold, or when the number of repeated repairs reaches the threshold, the repair still fails. The control then proceeds to step S207 to check the next address. If the repair of the self-checked address in the first NVM 11 finally fails, information about the repair-failed error, such as its status, address and number, is recorded in the status register 162. Additionally, for example, a block containing the repair-failed address may be labeled as a bad block, allowing the system to bypass the address, or automatically skip the first NVM 11 and read the corresponding backup content from the second NVM 20.

This process ends when each address in the self-check address range has been checked (or scanned) (the self-check of the content of the first NVM 11 has been completed), and the control then proceeds to step S208 to initiate the next startup step.

If an anomaly (e.g., physical damage, etc.) of the second NVM 20 is reported during the self-check, an interrupt may be generated to notify the CPU to allow CPU software to devise a subsequent countermeasure.

Optionally, if the number of repair-failed errors detected in the self-check exceeds a preset threshold, an interrupt may be generated to notify the CPU to allow CPU software to devise a subsequent countermeasure.

It will be understood that, during startup or running of the system, if required, the CPU or another master on the system bus may read content from the first NVM 11 via the system bus. In this case, the operation mechanism of the memory controller 10 of the present embodiment may be substantially the same as that of the first embodiment as shown in Figs. 5A and 5B, further description thereof is deemed unnecessary and omitted here.

The self-check module added in the memory controller of the present embodiment can perform a self-check on the first NVM at an appropriate time (e.g., during a POR, system reset, or running of the system, etc.) according to associated settings in the option byte, which ensures reliability of the content stored in the first NVM, reduces errors in the first NVM that may arise out of interference from the outside world, increases correctness of content read by the CPU from the first NVM, reduces the number of times of ECC or error correction with backup content from the second NVM performed on the first NVM, and accelerates and improves consistency of the system's operation.

It will also be understood that, during running of the system, a self-check may be performed before the system bus (i.e., the CPU or another master thereon) reads the first NVM. This can ensure reliability of the content of the first NVM, reduce errors in the first NVM that may arise out of interference from the outside world and increase correctness of content read by the CPU from the first NVM. Alternatively, a self-check may be performed simultaneously as, or after, the system bus (i.e., the CPU or another master thereon) reads the first NVM. This can ensure reliability of the content of the first NVM, reduce errors in the first NVM that may arise out of interference from the outside world and increase correctness of content read at a later time by the CPU from the first NVM.

### Embodiment 3

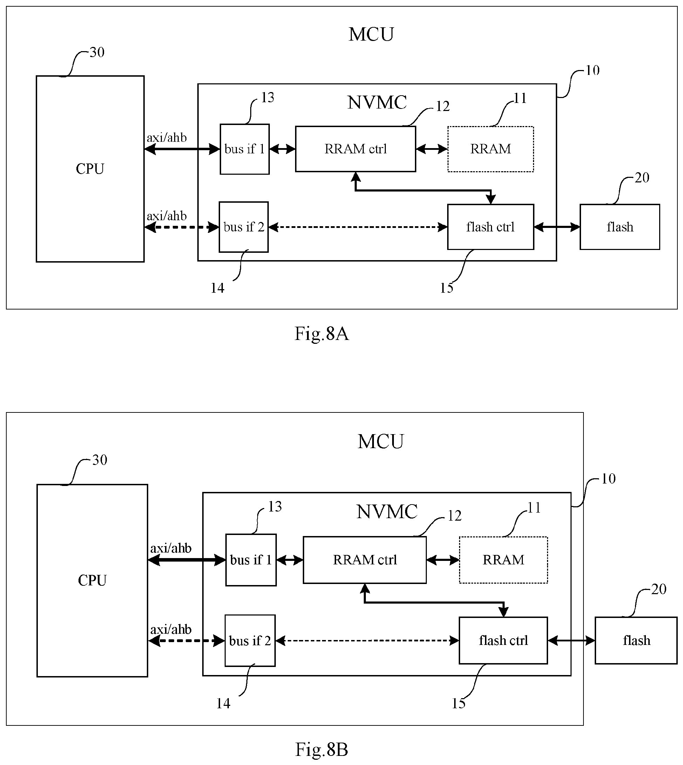

Referring to Figs. 8A and 8B, embodiments of the present invention also provide a microcontroller unit (MCU) chip including a central processing unit (CPU) 30 and the memory controller (NVMC) 10 as defined in any of the foregoing embodiments. The CPU 30 is coupled to the memory controller 10 via a system bus, and performs read and write operations on the first NVM 11 in the memory controller 10. The MCU chip further includes second NVM 20, which is built in (Fig. 8A) or coupled to (Fig. 8B) the chip. The second NVM 20 is coupled to the second memory controller 15 in the memory controller 10.

As this MCU chip employs the memory controller 10 of the present invention, it is much less likely to be interrupted due to errors in the content of the first NVM 11 during startup or running of the system. Moreover, the system has improved reliability and performance.

The description presented above is merely that of some preferred embodiments of the present invention and does not limit the scope thereof in any sense. Any and all changes and modifications made by those of ordinary skill in the art based on the above teachings fall within the scope as defined in the appended claims.

## Claims

1. A memory controller (10), coupled to a second non-volatile memory (NVM) (20) and comprising:
a first NVM (11) having a faster read and write speed than the second NVM (20) and serving as a main memory for storing content necessary for operation of a system;
a first memory controller (12) responsible for a read and write control of the first NVM (11);
a first bus interface (13), coupled to each of the first memory controller (12) and a system bus and is configured for transfer of content between the system bus and the first memory controller (12);
a second memory controller (15), coupled to the first memory controller (12) and configured to: cooperate with the first memory controller (12) to back up content in the first NVM (11) to the second NVM (20); and according to configuration information, read corresponding backup content from the second NVM (20) and transfer the corresponding backup content to the system bus, or write the corresponding backup content from the second NVM (20) to the first NVM (11) through the first memory controller (12) for content repair.

2. The memory controller (10) of claim 1, further comprising a second bus interface (14) coupled to each of the second memory controller (15) and the system bus, wherein the second bus interface (14) is configured to transfer the backup content read from the second NVM (20) by the second memory controller (15) to the system bus.

3. The memory controller (10) of claim 1, further comprising a control register (161) coupled to the first memory controller (12), wherein the first memory controller (12) is further configured to, after a system reset, read and load an option byte (Opt) into the control register (161), thereby validating the option byte (Opt), and
wherein the option byte (Opt) is a specific memory region in the first or second NVM (11,20) and is configured to store the configuration information, and preferably wherein the first memory controller (12) further comprises a self-check module (123) configured to, according to the configuration information, during a power-on reset (POR) phase or a system reset phase or a system operation phase, perform a self-check on content from the first NVM (11) by reading and comparing the content from the first NVM (11) with corresponding content from the second NVM (20), wherein if no difference is found, then the checked content from the first NVM (11) is correct, or if a difference is identified, then the checked content from the first NVM (11) contains an error.

4. The memory controller (10) of claim 3, wherein the option byte (Opt) loaded in the control register (161) include a self-check option byte, wherein the configuration information stored in the self-check option byte contains a self-check address range and at least one associated register value, wherein the self-check address range is configured to determine which region of the first NVM (11) the self-check module (123) is to perform a self-check on the content from, the at least one register value is configured to determine whether the self-check module (123) is to perform the self-check on content from the first NVM (11) and to determine a phase for performing the self-check by the self-check module (123) on the first NVM (11), and preferably
wherein the self-check module (123) is configured to: when the register value is configured to determine that the self-check is to be performed, at the phase for performing the self-check determined by the at least one register value, successively read and compare content at each address in the self-check address range of the first NVM with corresponding backup content from the second NVM (20), if no difference is found, then the content at the checked address of the first NVM (11) is correct and a next address in the self-check address range is checked, until all addresses in the self-check address range have been checked.

5. The memory controller (10) of any one of claims 1 to 3, wherein the first memory controller (12) comprises a first soft error correction module (121) configured to, as the system bus reads content from the first NVM (11), or as a self-check module (123) performs a self-check on content from the first NVM (11), perform an error checking and correction (ECC) on the content read from the first NVM (11), wherein:
when the configuration information pre-configures that the first NVM (11) is not to be repaired, the first soft error correction module (121) is further configured to correct an error detected in the ECC that is within an error correction ability thereof and provide corrected content to the system bus; or
regardless of whether the configuration information pre-configures that the first NVM (11) is to be repaired or not, the first soft error correction module (121) is further configured to correct an error detected in the ECC that is within an error correction ability thereof, and to provide the corrected content to the system bus and, wherein when the memory controller (10) becomes idle at a later time, the second memory controller (15) reads corresponding backup content from a default backup bank and writes the backup content to the first NVM (11) for content repair.

6. The memory controller (10) of claim 5, wherein the first soft error correction module (121) is further configured to, during writing of content to the first NVM (11) and/or during backing up of content in the first NVM (11) to the second NVM (20), generate a corresponding ECC code, wherein the ECC code generated by the first soft error correction module (121) and the content from the first NVM (11) are stored in the second NVM (20), or
wherein the second memory controller (15) further comprises a second soft error correction module (151) configured to, during backing up of content in the first NVM (11) to the second NVM (20), generate a corresponding ECC code, wherein the ECC code generated by the second soft error correction module (151) and the content from the first NVM (11) are stored in the second NVM (20), and
wherein as the system bus reads content from the first NVM (11), the first soft error correction module (121) performs an ECC in real time on the read content using a corresponding ECC code.

7. The memory controller (10) of claim 3, wherein the second memory controller (15) is further configured to, as the system bus reads the first NVM (11) and/or the self-check module (123) performs a self-check on the first NVM (11), read backup content from the second NVM (20) and write the read backup content to the first NVM (11) through the first memory controller (12) for content repair, according to the configuration information.

8. The memory controller (10) of claim 7, wherein the second memory controller (15) reads the backup content from the second NVM (20) address by address, row by row or block by block according to the configuration information and writes the read backup content to the first NVM (11) through the first memory controller (12) for repair of the first NVM (11), and/or
wherein the configuration information further configures a threshold number of repeated repair, wherein the second memory controller (15) is further configured to repeatedly repair the error in the first NVM (11) with the backup content from the second NVM (20), wherein the number of repeated repairs does not exceed the threshold number.

9. The memory controller (10) of claim 7, further comprising a status register (162) comprising a first register and/or a second register, wherein the first register configured to record: first status information of a result of a correction performed on the first NVM (11) when the configuration information configures that the first NVM (11) is not to be repaired, wherein the first status information contains a status and an address of the error; and second status information of a result of repair performed on the first NVM (11) when the configuration information configures that the first NVM (11) is to be repaired, wherein the second status information contains at least one of a status, an address and a number of a repair-failed error and a number of repair failure, wherein the second register is configured to record third status information of a result of a self-check performed by the self-check module (123) on the first NVM (11), wherein the third status information contains at least one of an status and an address of an error identified in the self-check and a number of repair failure.

10. The memory controller (10) of claim 9, wherein a software strategy determines whether to store the address of the error recorded in the first register and/or the second register as a corrupted address or not in the configuration information in the option byte (Opt), and preferably wherein the second memory controller (15) is further configured to, upon the system bus reading the corrupted addresses in the configuration information and/or the address of the error recorded in the status register (162), automatically skip the first NVM (11), read corresponding backup content from the second NVM (20) and return the read corresponding backup content to the system bus, and/or
wherein the status register (162) is further configured to generate an interrupt based on a corresponding record in the first register and/or the second register.

11. The memory controller (10) of any one of claims 1 to 8, wherein the first memory controller (11) further comprises a counter module (122) for counting at least one of a number of errors in the first NVM (11) detected by the first soft error correction module (121), a number of errors in the first NVM (11) detected by the self-check module (123), and a number of repeated repairs of the first NVM (11) and a number of repair-failed errors in the first NVM (11).

12. The memory controller (10) of any one of claims 1 to 11, wherein the first NVM (11) is an embedded memory that requires no erasure prior to writing, and the second NVM (20) is off-chip memory, and preferably
wherein the first NVM (11) comprises at least one of a ferroelectric random-access memory, a magnetic random-access memory a resistive random-access memory and a phase-change memory, and/or wherein the second NVM comprises a flash memory.

13. A microcontroller unit (MCU) chip, comprising a central processing unit (CPU) (30) and the memory controller (10) of any one of claims 1 to 12, wherein the CPU (30) is coupled to the memory controller (10) via a system bus and performs a read and write operation on the first NVM (11) in the memory controller (10), wherein the second NVM (20) is built in or externally connected to the MCU chip, and is coupled to the second memory controller (15) in the memory controller (10).

14. The MCU chip of claim 13, wherein the memory controller (10) further comprises a second bus interface (14) coupled to each of the second memory controller (15) and the system bus, and wherein the second bus interface (14) is configured to transfer backup content read by the second memory controller (15) from the second NVM (20) to the system bus.

15. The MCU chip of claim 13, wherein the first memory controller (12) further comprises a first soft error correction module (121) configured to, as the system bus reads content from the first NVM (11), or as the self-check module (123) performs a self-check on content from the first NVM (11), perform an error checking and correction (ECC) on the content read from the first NVM (11), wherein:
when the configuration information pre-configures that the first NVM (11) is not to be repaired, the first soft error correction module (121) is further configured to correct an error detected in the ECC that is within an error correction ability thereof and to provide corrected content to the system bus; or
regardless of whether the configuration information pre-configures that the first NVM (11) is to be repaired or not, the first soft error correction module (121) is further configured to correct an error detected in the ECC that is within an error correction ability thereof, and to provide corrected content to the system bus and, wherein when the memory controller (10) becomes idle at a later time, the second memory controller (15) reads corresponding backup content from a default backup bank and writes the backup content to the first NVM (11) for content repair.
